# EUROPÄISCHE PATENTSCHRIFT

(11) **EP 0 644 228 B1**
(45) Veröffentlichungstag und Bekanntmachung des Hinweises auf die Patenterteilung: **17.06.1998**
(21) Anmeldenummer: 94114469.3
(22) Anmeldetag: 14.09.1994
(51) Int. Cl.: C08J 11/00

(54) **Verfahren zur Herstellung von wässrigen Überzugsmitteln unter Wiederverwertung von Lackschlamm und die dabei erhaltenen Überzugsmittel**
Process for the preparation of aqueous coating composition using recycled laquer sludges and coating compostion so obtained
Procédé pour la préparation de composition de revêtement aqueux par utilisation de résidus de laques et composition de revêtement ainsi obtenue

(30) Priorität: 17.09.1993 DE 4331674
(43) Veröffentlichungstag der Anmeldung: 22.03.1995
(73) Patentinhaber: Herberts Gesellschaft mit beschränkter Haftung, 42285 Wuppertal (DE)
(72) Erfinder: Voigt, Günther, Metepec Mexiko, CP 52172 (MX)
(74) Vertreter: Türk, Gille, Hrabal, Leifert

(56) Entgegenhaltungen:
- EP-A- 0 212 214
- EP-A- 0 556 670
- US-A- 4 220 456

## Beschreibung

Die Erfindung betrifft ein Verfahren zur Herstellung von wäßrigen Überzugsmitteln, die Zusätze von Lackschlamm enthalten, wodurch die Wiederverwertung von Rückständen aus Lackierkabinen ermöglicht wird. Die Erfindung betrifft auch die dabei erhaltenen Überzugsmittel.
In der Industrie werden Lacke in weiten Bereichen im Sprühverfahren aufgetragen. Dabei handelt es sich um lösungsmittelhaltige Lacke oder um Wasserlacke. Ein Teil der verspritzten Überzugsmittel gelangt dabei nicht auf das Substrat und wird in speziellen Spritzkabinen aufgefangen.
Allgemein bekannt sind Spritzkabinen, die wasserberieselte Wände aufweisen. Dabei wird Overspray im Kabinenumlaufwasser aufgefangen und fällt in Form wäßriger Lackschlämme an. Im Bereich der Automobilserienlackierung handelt es sich beispielsweise um aus Füller-, Basislack-, Decklack- und Klarlackoverspray gebildete Lackschlämme. Diese wäßrigen Lackschlämme werden gewonnen durch Koagulation des im Kabinenumlaufwasser niedergeschlagenen Spritzlackoversprays. Dabei kann dann das Umlaufwasser im Kreislauf geführt werden. Zur Durchführung der Koagulation stehen chemische und physikalische Verfahren zur Verfügung. Beispiele sind Elektrokoagulation und Ausfällen durch Zusatz von Chemikalien, wie z.B. Säuren, Salze, Polyelektrolyte, oder auch von Feststoffen, wie z.B. Schichtsilikate.
Die so erhaltenen Lackschlämme werden dann in Dekantern abgetrennt, grob vom Wasser befreit und müssen dann als Sondermüll deponiert werden.
Angesichts knapper werdenden Deponierraumes sind intensive Bemühungen unternommen worden, um anderweitige Entsorgungs- oder Wiederverwertungsverfahren für derartige Lackschlämme zu finden.
In der US-A-4 312 795 werden wäßrige Überzugsmittel beschrieben, bei denen ein wäßriges Bindemittel in Wasser gelöst ist, das ein Amin und ein hydrophiles Lösungsmittel enthält. Dem Überzugsmittel können Pulverlackabfälle zugesetzt werden.
Die DE-A-39 24 312 und die WO 90/08178 beschreiben die Vermengung von Lackschlamm mit Kohlenstaub und basischen Stoffen zwecks Verfestigung und anschließender Verbrennung.

Die EP-A-502 232 beschreibt ein biologisches Abbauverfahren für Lackschlämme. Das Verfahren ist aufwendig, verbleibende Reststoffe müssen ebenfalls deponiert werden.

Die DE-A-39 31 204 beschreibt ein Verfahren zur Einarbeitung gut entwässerter Lackschlämme in eine Schmelze thermoplastischer Kunststoffe und die Weiterverarbeitung zu Formkörpern.

Die DE-A-40 12 189 beschreibt ein Verfahren zur Beseitigung von Lackschlämmen durch Verarbeitung zu Platten für die Bauindustrie unter Einwirkung von Druck und hoher Temperatur. Hier darf, wie auch bei den vorstehenden Verfahren, der Wassergehalt des Lackschlamms nicht zu hoch sein, er sollte im Ausgangsmaterial für die Plattenherstellung zwischen 1 und 30 Gew.-% liegen.

Die EP-B-407 770 beschreibt die Entsorgung von wäßrigen Lackschlämmen durch Aufbringen der mehr als 30 % Restfeuchte enthaltenden Schlämme auf geeignete bahnförmige Trägermaterialien, gefolgt von einem Trocknungsschritt.

All diese Verfahren sind energieaufwendig und/oder funktionieren nur mit hinreichend entwässertem Lackschlamm.

Die EP-A-212 214 beschreibt ein Verfahren zur Wiederaufbereitung von in noch vernetzbarer Form anfallenden Lackschlämmen durch Emulgierung unter Zusatz von oberflächenaktiven Mitteln. Die so erhaltenen Zubereitungen der noch vernetzungsfähigen Lackschlämme werden dann eingesetzt zur Herstellung schall- und wärmeisolierender Platten oder streichfähiger, pastöser Dispersionen, die beim Aushärten unter Wärmeeinwirkung geschäumte isolierend wirkende Schichten ergeben.

Die DE-A-38 21 760 und die EP-A-481 174 beschreiben Verfahren zur Rückgewinnung der Lackbestandteile, wie Pigmente, Bindemittel, Lösemittel aus 94 114 469.3-2115 H 32 614 - Herberts Gesellschaft mit beschränkter Haftung

Lackschlämmen, durch eine Kombination aufwendiger chemischer und physikalischer Verfahren.

Aufgabe der Erfindung ist es, ein Verfahren bereitzustellen, welches erlaubt wäßrige Lackschlämme in einfacher Weise wiederzuverwerten unter Erzeugung hochwertiger Produkte. Das Verfahren soll mit grob entwässerten Lackschlämmen durchführbar sein, ohne daß energieintensive Trocknungsschritte durchgeführt werden müssen.

Es hat sich gezeigt, daß diese Aufgabe gelöst werden kann durch die Bereitstellung wäßriger Überzugsmittel, die als Bestandteil wiederaufgearbeiteten Lackschlamm enthalten.

Ein Gegenstand der Erfindung ist daher ein Verfahren zur Herstellung von wäßrigen Überzugsmitteln unter Wiederverwertung von Lackschlamm, das dadurch gekennzeichnet ist, daß man
A) ein Gewichtsteil frisch gewonnenen Lackschlamm mit einem Wassergehalt von 10 bis 50 Gew.-% unter Scherung einarbeitet in
B) 0,15 bis 0,6 Gewichtsteile eines Gemischs aus
   B1) einem oder mehreren organischen Lösemitteln mit einer Wasserlöslichkeit bei 20°C von über 500 g pro Liter Wasser,
   B2) einem oder mehreren organischen Lösemitteln mit einer Wasserlöslichkeit bei 20°C von unter 500 g pro Liter Wasser, nämlich Alkohole, Glykolether, Glykoletherester und/oder Glykolester,
   B3) einem oder mehreren Aminen und/oder Aminoalkoholen und
   B4) gegebenenfalls einem oder mehreren lacküblichen Netzmitteln,
   wobei eine Homogenisierung durch die Scherung entweder in der gesamten Komponente B) oder zunächst in der Komponente B1) mit anschließender Zugabe der Komponenten B2), B3) und gegebenenfalls B4) erfolgt, worauf man 0,4 bis 1,5 Gewichtsteile des homogenisierten Gemischs aus den Komponenten A) und B) einarbeitet in
C) einen Gewichtsteil eines wäßrigen Lackkonzentrats auf der Basis einer wäßrigen Bindemitteldispersion mit einer Mindestfilmbildetemperatur unterhalb von 10°C und einem Festkörpergehalt von über 40 Gew.-%.

Ein weiterer Gegenstand der vorliegenden Erfindung sind die nach dem erfindungsgemäßen Verfahren erhaltenen wäßrigen Überzugsmittel.

Bei den frisch gewonnenen, teilweise entwässerten Lackschlämmen A) handelt es sich um in üblichen Dekantern abgetrennte Dverspraykoagulate von wäßrigen oder lösemittelbasierenden Überzugsmitteln. Bevorzugt sind die Koagulate wäßriger Überzugsmittel. Für das erfindungsgemäße Verfahren können Overspraykoagulate auf Basis einkomponentiger oder mehrkomponentiger Überzugsmittel verwendet werden. Im Falle der Overspraykoagulate mehrkomponentiger Überzugsmittel sollen diese noch nicht vernetzt sein. Bevorzugt sind die Koagulate einkomponentiger Überzugsmittel. Dabei kann es sich um Überzugsmittel auf Basis physikalisch trocknender oder chemisch vernetzender Bindemittel handeln. Geeignet sind übliche Bindemittelsysteme auf der Basis organischer filmbildender Harze, wie z.B. Acrylatharze, Polyesterharze oder Polyurethanharze. Fluorhaltige Bindemittel und solche auf Polysiloxanbasis sollen nicht enthalten sein. Die Überzugsmittel können pigmentiert oder unpigmentiert sein. Beispiele für Überzugsmittel, deren Overspraykoagulat mit Hilfe des erfindungsgemäßen Verfahrens wiederverwertet werden kann, sind Effektbasislacke, unifarbene Basislacke, Decklacke, Füller und Klarlacke. Bevorzugte Beispiele sind Basislacke, Decklacke und Füllerüberzugsmittel, insbesondere Wasserbasislacke, wäßrige Decklacke und Hydrofüller.

Das erfindungsgemäße Verfahren erlaubt auch die Aufarbeitung solcher wäßriger Lackschlämme zu wäßrigen Überzugsmitteln, die Gemische von Overspraykoagulaten unterschiedlicher Überzugsmittel enthalten.

Um ein möglichst einheitliches Lackschlammkonzentrat zu erhalten, ist es bevorzugt, verschiedene einzelne Lackschlämme zu mischen. Das kann entweder auf der Stufe des Lackschlamms geschehen, oder aber es wird ein Vermischen der aus Lackschlamm A) und Additiven B) hergestellten Mischungen durchgeführt. Dabei ist darauf zu achten, daß nur Lackschlämme auf Basis gleichartig geladener und/oder ladungsfreier Bindemittel miteinander gemischt werden. Bevorzugt werden anionische oder nicht-ionische Bindemittel enthaltende Lackschlämme eingesetzt.

Durch das Vermischen von unterschiedlichen Lackschlammtypen können Unterschiede im Pigmentgehalt und/oder in der Bindemittelzusammensetzung ausgeglichen werden und das Lackschlammkonzentrat besitzt eine gleichmäßigere Zusammensetzung.

Die im Dekanter gewonnenen Lackschlämme A) haben Festkörpergehalte von 50 - 90 Gew.-%, bevorzugt von 60 - 85 Gew.-%. Ihr Wassergehalt beträgt zwischen 10 und 50 Gew.-%, bevorzugt zwischen 15 und 40 Gew.-%. Eine weitere Reduzierung des Wassergehaltes, wie z.B. durch zusätzliche Verfahrensmaßnahmen, ist nicht notwendig, aber möglich.

Das erfindungsgemäße Verfahren wird mit frisch gewonnenem Lackschlamm durchgeführt. Beispielsweise sollte der Lackschlamm nicht älter als 24 Stunden sein, bevor er in den Additiven B), d.h. den organischen Lösemitteln, Aminen und gegebenenfalls Netzmitteln aufgenommen wird.

Die Aufnahme von A) in B) kann direkt beim Anwender erfolgen, z.B. durch direkte Aufnahme des im Dekanter gewonnenen Lackschlamms in einem mit B) gefüllten Behälter, oder der Lackschlamm wird zu einem Verarbeiter transportiert. Die entstehende Mischung ist lagerstabil und kann auch zu einem späteren Zeitpunkt weiterverarbeitet werden.

Erfindungswesentlich ist, daß A) im Additiv-Gemisch B) aufgenommen wird und nicht umgekehrt. Dies soll unter ständiger Scherung geschehen. Die Zusammensetzung von B) kann je nach der Zusammensetzung des Lackschlammkonzentrats A), z.B. je nach dessen Wassergehalt variiert werden. Besitzt A) einen Wassergehalt von über 30 Gew.-%, so ist es bevorzugt, A) unter Scherung nur in der Komponente B1) aufzunehmen und nach erfolgten Homogenisieren die weiteren Komponenten von B), nämlich B2), B3) und B4) zuzumischen. Liegt der Wassergehalt in A) unter 30 Gew.%, so ist es bevorzugt A) in der fertigen Additiv-Mischung aus B1), B2), B3) und B4) aufzunehmen.

Die Additive B) sollen mindestens ein organisches, eine Wasserlöslichkeit bei 20°C von über 500 g pro Liter Wasser aufweisendes Lösemittel B1), mindestens ein organisches, eine Wasserlöslichkeit bei 20°C von unter 500 g pro Liter Wasser aufweisendes Lösemittel B2), mindestens ein Amin und/oder einen Aminoalkohol B3) und gegebenenfalls ein lackübliches Netzmittel B4) enthalten.

Unter den organischen Lösemitteln B1) sind solche bevorzugt, die bei 20°C unbegrenzt wasserlöslich sind. Bevorzugte organische Lösemittel B2) sind solche, die eine Wasserlöslichkeit bei 20°C von 1,0 bis 450 g pro Liter Wasser aufweisen.

Beispiele für organische Lösemittel B1) sind N-Methylpyrrolidon, Dimethylformamid; Alkohole, z.B. Alkanole, wie Methanol und Ethanol; Glykole, wie Ethylenglykol, Propylenglykol, Diethylenglykol, Dipropylenglykol, Triethylenglykol, Tripropylenglykol; Glykolether, wie Methylglykol, Ethylglykol, Isopropylglykol, Butylglykol, Methyldiglykol, Ethyldiglykol, Butyldiglykol, Ethyltriglykol, Butyltriglykol, Methoxypropanol, Ethoxypropanol, Propoxypropanol, Propylenglykoldimethylether, Dipropylenglykoldimethylether, Diethylenglykoldimethylether, Dipropylenglykolmonomethylether, Methoxybutanol; aber auch Methylglykolacetat. Besonders bevorzugte Lösemittel B1) sind N-Methylpyrrolidon und unbegrenzt wasserlösliche Glykolether.

Beispiele für organische Lösemittel B2) sind Alkohole, z.B. Alkanole, wie Butanol, sek.-Butanol; Glykolether, wie Hexylglykol, Butoxypropanol, Dipropylenglykolbutylether, Tripropylenglykolbutylether; Glykoletherester, wie Ethylglykolacetat, Butylglykolacetat, Butyldiglykolacetat, Methoxypropylacetat, Ethoxypropylacetat; Glykolester, wie Propylenglykoldiacetat. Besonders bevorzugte Lösemittel B2) sind Glykoletherester mit einer Wasserlöslichkeit bei 20°C zwischen 1,0 und 450 g pro Liter Wasser.

B) enthält bevorzugt 45 bis 70 Gew.-% eines oder mehrerer Lösemittel B1), und 30 bis 50 Gew.-% eines oder mehrerer Lösemittel B2), 1 bis 5 Gew.-% eines oder mehrerer Amine und/oder Aminoalkohole B3) und 0 bis 3 Gew.-%, bevorzugt 0,5 - 3 Gew.-% eines oder mehrerer handelsüblicher Netzmittel B4).

Ein bevorzugtes Lösungsmittelgemisch (B1 + B2) ist die Kombination von Butylglykolacetat und Butylglykol, insbesondere im Mischungsverhältnis zwischen 0,5 : 1 bis 1,1 : 1, bezogen auf das Gewicht.

Als Additive B3) sind die lacküblichen Amine einzeln oder im Gemisch wie z.B. Triethylamin, N-Methylmorpholin geeignet. Bevorzugt werden jedoch die lacküblichen Aminoalkohole verwendet, wie z.B. 2-Amino-2-methyl-1-propanol, Dimethylisopropanolamin, Dimethylethanolamin. Die Amine werden in Mengenanteilen von 1 - 5 Gew.-%, bevorzugt unter 4 Gew.-% bezogen auf die Mischung aus B1), B2), B3) und B4) verwendet.

Als Netzmittel B4) dienen die in der Lackindustrie üblichen Netz- oder Dispergiermittel. Sie werden in Mengenanteilen von 0 - 3 Gew.-%, bezogen auf die Mischung aus B1), B2), B3) und B4) eingesetzt. Ein Beispiel für ein bevorzugtes Netzmittel ist Tetramethyldecindiol.

Die Additive B), d.h. die organischen Lösemittel, Amine und/oder Aminoalkohole und gegebenenfalls Netzmittel werden in einem Gewichtsverhältnis von 0,15 : 1 bis 0,6 : 1, bevorzugt 0,2 : 1 bis 0,5 : 1 mit dem frisch gewonnenen Lackschlamm A) unter Scherung, z.B. Rühren, intensiv vermischt, wobei A) in B) aufgenommen wird.

Es bildet sich eine homogene, lagerstabile Mischung. Diese kann unmittelbar weiterverarbeitet werden oder sie kann zu einem späteren Zeitpunkt verarbeitet werden.

Das wäßrige Lackkonzentrat C) basiert auf einer wäßrigen Bindemitteldispersion mit einer Mindestfilmbildetemperatur unterhalb von 10°C, bevorzugt von unter 5°C. Dabei handelt es sich um nicht-vernetzende, physikalisch trocknende Bindemittel. Als Bindemittelbasis können beispielsweise Polyurethane, (Meth)acrylcopolymere, Styrol-Acryl-Copolymere und Styrol-Butadien-Copolymere dienen.

Bevorzugt enthält das wäßrige Lackkonzentrat C) als wäßrige Bindemitteldispersion einen wäßrigen Styrol-Butadien-Copolymer-Latex. Derartige Latices sind im Handel erhältlich, beispielsweise die Handelsprodukte Lipaton SB 4520 und Lipaton SB 5521 der Firma Hüls.

Pigmentiert wird das wäßrige Lackkonzentrat C) mit lacküblichen Pigmenten und/oder Füllstoffen, wie z.B. Ruß, Titandioxid, Bariumsulfat, Kalziumcarbonat, Siliziumdioxid, Talkum, Kaolin. Bevorzugt werden schwarze oder dunkelgraue rußhaltige, wäßrige Lackkonzentrate verwendet. Die Pigmentierung erfolgt durch Dispergieren der Pigmente und Füllstoffe in der wäßrigen Bindemitteldispersion. Die Pigmentierung unter Verwendung einer Pigmentpaste und damit eines speziellen Pastenharzes ist möglich aber nicht bevorzugt.

Das wäßrige Lackkonzentrat C) besitzt einen Festkörper von über 40 Gew.% bevorzugt bei einem Pigment-/Bindemittel-Verhältnis von 0,1 : 1 bis 3,0 : 1, bezogen auf das Gewicht.

Weiterhin können die wäßrigen Lackkonzentrate C) organische Lösemittel in geringen Anteilen von bis zu 10 Gew.-%, bevorzugt unter 7 Gew.-% enthalten. Bevorzugte im wäßrigen Lackkonzentrat C) enthaltene organische Lösemittel sind solche, die vorstehend als Komponenten B1) oder B2) beschrieben wurden.

Die wäßrigen Lackkonzentrate können ferner übliche Additive für wäßrige Lacksysteme enthalten, wie z.B. Entschäumer, Netzmittel, Weichmacher, Verlaufsmittel, Verdicker.

Die homogene Mischung aus A) und B) wird unter Scheren, worunter beispielsweise intensives Mischen, wie z.B. Rühren oder die Behandlung in einem statischen Mischer, verstanden wird, in das wäßrige Lackkonzentrat C) auf Basis einer wäßrigen Bindemitteldispersion mit einer Mindestfilmbildungstemperatur unterhalb von 10°C eingearbeitet. Dabei beträgt das Mischungsverhältnis von 0,4 - 1,5 Teile der aus A) und B) hergestellten Mischung zu 1 Teil Lackkonzentrat C), bevorzugt von 0,5 - 1,1 Teile zu 1 Teil.

Um ein möglichst gleichmäßiges Überzugsmittel zu erhalten, ist es möglich den Festkörper bzw. den Pigmentgehalt der aus A) und B) hergestellten Mischung zu bestimmen. Ist darin ein hoher Pigmentgehalt vorhanden, liegt beispielsweise das Pigment-/Bindemittel-Verhältnis von C) im unteren Bereich. Ist nur ein geringer Pigmentgehalt in der Mischung aus A) und B) vorhanden, liegt das Pigment-/Bindemittel-Verhältnis von C) beispielsweise im oberen Bereich.

Die nach dem erfindungsgemäßen Verfahren erhaltenen wäßrigen Überzugsmittel besitzen bevorzugt Festkörpergehalte von 45 bis 70 Gew.-% bei einem bevorzugt zwischen 0,4 : 1 und 1,5 : 1 eingestellten Pigment-/Bindemittel-Verhältnis. Die Viskosität des durch Mischen von A), B) und C) hergestellten Überzugsmittels kann durch Zugabe von Wasser eingestellt werden. Ebenso ist es möglich, daß der pH-Wert eingestellt wird. Der pH-Wert sollte im allgemeinen zwischen 8 und 9,5, bevorzugt unter 9 betragen.

Zu dem Überzugsmittel werden keine zusätzlichen Vernetzer gegeben. Es handelt sich um ein im wesentlichen physikalisch trocknendes System. Gegebenenfalls über das Lackschlammkonzentrat eingebrachte Vernetzer sind in geringen Mengen vorhanden und führen beim Einbrennen gegebenenfalls zu einer geringfügigen Vernetzung. Dabei wird nur die Molmasse der im erfindungsgemäßen Überzugsmittel vorhandenen Bindemittel erhöht.

Nach dem erfindungsgemäßen Verfahren erhält man durch intensives Vermischen der Bestandteile A), B) und C) ein wäßriges lagerstabiles Überzugsmittel, das insbesondere als Unterbodenschutzmaterial geeignet ist.

Das nach dem erfindungsgemäßen Verfahren gewonnene wäßrige Überzugsmittel wird durch Streichen oder Spritzen appliziert, bevorzugt Airless-Spritzen - gegebenenfalls in mehreren Spritzgängen - in einer Trockenschichtdicke von 50 - 3000 µm. Die Applikation erfolgt auf metallische Substrate, z.B. auf elektrophoretisch grundierte Metallbleche. Insbesondere erfolgt der Auftrag im Bereich des Unterbodens und der Schweller von elektrophoretisch grundierten Karossen, wie sie in der Autoserien- und der Nutzfahrzeuglackierung anzutreffen sind.

Nach gegebenenfalls vorherigem Ablüften bei 20 bis 30°C werden die so erhaltenen Unterbodenschutzschichten eingebrannt oder getrocknet. Dies geschieht bei Temperaturen von 60 - 180°C, bevorzugt in einem gemeinsamen Schritt mit dem Einbrennen eines Füllers. Es entstehen elastische, steinschlagfeste Überzugsschichten.

Das erfindungsgemäße Verfahren erlaubt in einfacher Weise grob entwässerte Lackschlämme aufzuarbeiten zu wertvollen wäßrigen Unterbodenschutzmaterialien. Insbesondere ist es nicht notwendig, den Lackschlamm in energieaufwendiger Weise zu entwässern.

Die Durchführung des erfindungsgemäßen Verfahrens ist nicht begrenzt auf die Aufarbeitung sortenreiner wäßriger Lackschlämme, d.h. der wäßrige Lackschlamm kann auch Gemische von Overspraykoagulaten unterschiedlicher Überzugsmittel enthalten.

In den folgenden Beispielen beziehen sich Teile und Prozent, sofern nicht anders angegeben, auf das Gewicht.

### Herstellung wäßriger Lackkonzentrate C

### Beispiel 1:

40 Teile einer handelsüblichen, wäßrigen Dispersion eines Styrol-Butadien-Copolymeren mit einem Festkörper von 50 Gew.-% und einer Mindestfilmbildetemperatur von 0°C werden unter dem Dissolver mit 2 Teilen einer 30 %igen butanolischen Lösung eines handelsüblichen Netzmittels, 1,5 Teilen einer 20 %igen wäßrigen Lösung von Natriumpolyphosphat und 0,5 Teilen Dimethylethanolamin versetzt. Danach werden 2,5 Teile Ruß und 52,5 Teile Calciumcarbonat eingerührt. Nach Zugabe von 1 Teil Butylglykolacetat wird 20 min. unter dem Dissolver dispergiert.

### Beispiel 2:

Analog zu Beispiel 1 werden 80 Teile der wäßrigen Dispersion des Styrol-Butadien-Copolymeren aus Beispiel 1, 4 Teile der Lösung des Netzmittels aus Beispiel 1, 3 Teile der wäßrigen Lösung von Natriumpolyphosphat, 1 Teil Dimethylethanolamin, 5 Teile Ruß, 2 Teile Butylglykolacetat und zusätzlich 5 Teile einer 20 %igen wäßrigen Verdickerlösung auf Polyacrylsäurebasis verarbeitet.

### Herstellung wäßriger Unterbodenschutzmaterialien

### Beispiel 3:

69 Teile eines Wasserbasislackkoagulats, gewonnen aus dem Dekanter einer industriellen Lackieranlage als teilentwässertes Overspraygemisch verschiedenfarbiger Uni- und Effektwasserbasislacke, mit 75 % Festkörper und einem Pigment/Bindemittel-Gewichtsverhältnis von 0,2 : 1 werden unter stetigem Rühren langsam in ein Gemisch aus 15 Teilen Butylglykol, 15 Teilen Butylglykolacetat und 1 Teil Dimethylethanolamin gegeben. Nach vollständiger Zugabe wird 15 min. gerührt bis zur vollständigen Homogenisierung.

35 Teile des so erhaltenen homogenen Gemischs läßt man unter Rühren in 65 Teile des Lackkonzentrats aus Beispiel 1 einfließen.

### Beispiel 4:

74 Teile eines Wasserfüllerkoagulats, gewonnen aus dem Dekanter einer industriellen Lackieranlage als teilentwässertes Overspraygemisch verschiedenfarbiger Wasserfüller, mit 78 % Festkörper und einem Pigment/Bindemittel-Gewichtsverhältnis von 1,5 : 1 werden unter stetigem Rühren langsam in ein Gemisch aus 12,5 Teilen Butylglykol, 12,5 Teilen Butylglykolacetat und 1 Teil Dimethylethanolamin gegeben. Es wird 15 min. bis zur vollständigen Homogenisierung gerührt.

40 Teile des so erhaltenen homogenen Gemischs läßt man unter Rühren in 60 Teile des Lackkonzentrats aus Beispiel 2 einfließen.

### Beispiel 5:

Beispiel 4 wird wiederholt mit dem Unterschied, daß anstelle der 12,5 Teile Butylglykol 12,5 Teile N-Methylpyrrolidon eingesetzt werden.

Mit den wäßrigen Unterbodenschutzmaterialien aus den Beispielen 3, 4 und 5 werden jeweils kataphoretisch grundierte Stahlbleche in einer Trockenschichtdicke von 100 µm beschichtet. Nach 5-minütigem Ablüften bei Raumtemperatur wird 20 min. bei 180°C eingebrannt. Man erhält gut haftende, elastische Beschichtungen mit guter Steinschlagfestigkeit und gutem Korrosionsschutzniveau.

## Patentansprüche

1. Verfahren zur Herstellung von wäßrigen Überzugsmitteln unter Wiederverwertung von Lackschlamm, dadurch gekennzeichnet, daß man
A) ein Gewichtsteil frisch gewonnenen Lackschlamm mit einem Wassergehalt von 10 bis 50 Gew.-% unter Scherung einarbeitet in
B) 0,15 bis 0,6 Gewichtsteile eines Gemischs aus
B1) einem oder mehreren organischen Lösemitteln mit einer Wasserlöslichkeit bei 20°C von über 500 g pro Liter Wasser,
B2) einem oder mehreren organischen Lösemitteln mit einer Wasserlöslichkeit bei 20°C von unter 500 g pro Liter Wasser, nämlich Alkohole, Glykolether, Glykoletherester und/oder Glykolester,
B3) einem oder mehreren Aminen und/oder Aminoalkoholen und
B4) gegebenenfalls einem oder mehreren lacküblichen Netzmitteln,
wobei eine Homogenisierung durch die Scherung entweder in der gesamten Komponente B) oder zunächst in der Komponente B1) mit anschließender Zugabe der Komponenten B2). B3) und gegebenenfalls B4) erfolgt,
worauf man
0,4 bis 1,5 Gewichtsteile des homogenisierten Gemischs aus den Komponenten A) und B) einarbeitet in
C) einen Gewichtsteil eines wäßrigen Lackkonzentrats auf der Basis einer wäßrigen Bindemitteldispersion mit einer Mindestfilmbildetemperatur unterhalb von 10°C und einem Festkörpergehalt von über 40 Gew.-%.

2. Verfahren nach Anspruch 1, dadurch gekennzeichnet, daß die Komponente B) 45 bis 70 Gew.-% der Lösemittelkomponente B1), 30 bis 50 Gew.-% der Lösemittelkomponente B2), 1 bis 5 Gew.-% der Amin- bzw. Aminoalkoholkomponente B3) und 0 bis 3 Gew.-% der Netzmittelkomponente B4) enthält.

3. Verfahren nach einem der vorhergehenden Ansprüche, dadurch gekennzeichnet, daß als Lösemittelkomponente B1) N-Methylpyrrolidon, Dimethylformamid, Alkohole und/oder Glykolether verwendet werden.

4. Verfahren nach Anspruch 3, dadurch gekennzeichnet, daß als Lösemittelkomponente B1) N-Methylpyrrolidon und/oder unbegrenzt wasserlösliche Glykolether verwendet werden.

5. Verfahren nach einem der vorhergehenden Ansprüche, dadurch gekennzeichnet, daß das Lackkonzentrat C) auf Polyurethanen, (Meth)acrylcopolymeren, Styrol-Acryl-Copolymeren und/oder Styrol-Butadien-Copolymeren als Bindemittel basiert.

6. Verfahren nach einem der vorhergehenden Ansprüche, dadurch gekennzeichnet, daß die Scherung durch intensives Mischen oder Rühren erfolgt.

7. Wäßriges Überzugsmittel, erhalten nach dem Verfahren eines der Ansprüche 1 bis 6.

8. Verwendung der Überzugsmittel nach Anspruch 7 zur Herstellung von Überzügen auf dem Kraftfahrzeugsektor.

9. Verwendung der Überzugsmittel nach Anspruch 7 als Unterbodenschutzmaterial.

## Claims

1. A process for producing aqueous coating media with the re-utilisation of lacquer sludge, characterised in that
A) one part by weight of freshly obtained lacquer sludge which has a water content of 10 to 50 % by weight is incorporated, with shearing, in
B) 0.15 to 0.6 parts by weight of a mixture comprising
B1) one or more organic solvents with a solubility in water at 20°C which is greater than 500 g per litre of water,
B2) one or more organic solvents with a solubility in water at 20°C which is less than 500 g per litre of water, namely alcohols, glycol ethers, glycol ether esters and/or glycol esters,
B3) one or more amines and/or amino alcohols, and
B4) optionally one or more customary lacquer wetting agents,
wherein homogenisation by shearing is effected either in component B) as a whole or is first effected in component B1) with the subsequent addition of components B2), B3) and optionally B4),
whereupon
0.4 to 1.5 parts by weight of the homogenised mixture of components A) and B) is incorporated in
C) one part by weight of an aqueous lacquer concentrate based on an aqueous binder vehicle dispersion which has a minimum film-forming temperature of less than 10°C and a solids content of greater than 40 % by weight.

2. A process according to claim 1, characterised in that component B) contains 45 to 70 % by weight of solvent component B1), 30 to 50 % by weight of solvent component B2), 1 to 5 % by weight of amine or amino alcohol component B3), and 0 to 3 % by weight of wetting agent component B4).

3. A process according to either one of the preceding claims, characterised in that Nmethylpyrrolidone, dimethylformamide, alcohols and/or glycol ethers are used as solvent component B1).

4. A process according to claim 3, characterised in that N-methylpyrrolidone, or glycol ethers which are unrestrictedly soluble in water, is used as solvent component B1).

5. A process according to any one of the preceding claims, characterised in that lacquer concentrate C) is based on polyurethanes, (meth)acrylic copolymers, styrene-acrylic copolymers and/or styrene-butadiene copolymers as binder vehicles.

6. A process according to any one of the preceding claims, characterised in that shearing is effected by intensive mixing or stirring.

7. An aqueous coating medium obtained by the process according to any one of claims 1 to 6.

8. The use of the coating media according to claim 7 for the production of coatings in the motor vehicle sector.

9. The use of the coatings according to claim 7 as an under-floor protection material.

## Revendications

1. Procédé de fabrication d'agents de revêtement aqueux par recyclage de résidus de laque, caractérisé en ce qu'on
A) introduit une partie en poids de résidus de laque fraîchement récupérés avec une teneur en eau comprise entre 10 et 50 % en poids par cisaillement dans
B) 0,15 à 0,6 partie en poids d'un mélange composé
B1) d'un ou plusieurs solvants organiques avec une solubilité dans l'eau à 20°C supérieure à 500 g par litre d'eau,
B2) d'un ou plusieurs solvants organiques avec une solubilité dans l'eau à 20°C inférieure à 500 g par lire d'eau, à savoir des alcools, des glycoléthers, des glycolétheresters et/ou des glycolesters,
B3) d'une ou plusieurs amines et/ou aminoalcools et
B4) le cas échéant d'un ou plusieurs agents mouillants classiques de laque,
une homogénéisation par le cisaillement se produisant soit dans le composant global B) ou d'abord dans le composant B1) avec ajout successif des composants B2), B3) et le cas échéant B4),
après quoi on
ajoute entre 0,4 et 1,5 parties en poids du mélange homogénéisé composé des composants A) et B) dans
C) une partie en poids d'un concentré de laque aqueux sur la base d'une dispersion de liant aqueuse avec une température de formation de film minimale inférieure à 10°C et une teneur en solides supérieure à 40 % en poids.

2. Procédé selon la revendication 1, caractérisé en ce que le composant B) contient entre 45 et 70 % en poids du solvant B1), entre 30 et 50 % en poids du solvant B2, entre 1 et 5 % en poids de l'amine ou de l'aminoalcool B3) et entre 0 et 3 % en poids de l'agent mouillant B4).

3. Procédé selon l'une quelconque des revendications précédentes, caractérisé en ce que comme solvant B1), on utilise de la N-méthylpyrrolidone, du diméthylformamide, des alcools et/ou des glycoléthers.

4. Procédé selon la revendication 3, caractérise en ce que comme solvant B1), on utilise de la Nméthylpyrrolidone et/ou des glycoléthers totalement hydrosolubles.

5. Procédé selon l'une quelconque des revendications précédentes, caractérisé en ce que le concentré de laque C) est à base de polyuréthannes, de copolymères méthacryliques, de copolymères de styrène/acrylate et/ou de copolymères de styrène/butadiène servant de liant.

6. Procédé selon l'une quelconque des revendications précédentes, caractérisé en ce que le cisaillement a lieu par mélangeage ou agitation intensifs.

7. Agent de revêtement aqueux obtenu selon le procédé de l'une des revendications 1 à 6.

8. Utilisation des agents de revêtement selon la revendication 7 pour la fabrication de revêtements dans le secteur automobile.

9. Utilisation des agents de revêtement selon la revendication 7 comme matériau de protection de bas de caisse.
